# EUROPÄISCHE PATENTSCHRIFT

(11) **EP 1 220 201 B1**
(45) Veröffentlichungstag und Bekanntmachung des Hinweises auf die Patenterteilung: **30.07.2008**
(21) Anmeldenummer: 01000709.4
(22) Anmeldetag: 05.12.2001
(51) Int. Cl.: G10L 15/26

(54) **Verfahren und System zur automatischen Aktionssteuerung bei Vorträgen**
Method and system for automated control of actions in presentations
Procédé et système de gestion automatique des actions lors de conférences

(30) Priorität: 06.12.2000 DE 10060587
(43) Veröffentlichungstag der Anmeldung: 03.07.2002
(73) Patentinhaber: Philips Intellectual Property & Standards GmbH, 20099 Hamburg (DE); Koninklijke Philips Electronics N.V., 5621 BA Eindhoven (NL)
(72) Erfinder: Schramm, Hauke, c/o Philips Corp. Int. Prop. GmbH, 52066, Aachen (DE)
(74) Vertreter: Volmer, Georg

(56) Entgegenhaltungen:
- EP-A- 0 896 467
- WO-A-00/54496
- DE-A- 3 839 361
- DE-A- 19 808 585

## Beschreibung

Die Erfindung betrifft ein Verfahren sowie ein System zur automatischen Steuerung von Aktionen in Abhängigkeit von einem Vortragstext.

Sprecher von vorgefertigten Texten, wie beispielsweise Nachrichtensprecher oder Politiker, lesen ihre Texte häufig direkt vom Papier ab. Dies ist relativ umständlich und birgt die Gefahr, nach dem Umblättern den Anschluss der Rede auf der nächsten Seite zu verlieren. Zudem hat es den Nachteil, dass der Vortragende immer wieder den Blick vom Publikum abwenden muss, um weiterzulesen. Ähnliches gilt auch für freie Redner, die sich eine Stichwortliste gemacht haben und anhand dieser Stichwortliste ihre Rede halten und deshalb gelegentlich auf ein Papier mit dieser Stichwortliste blicken müssen. In vielen anderen Bereichen, in denen ein vorbestimmter Text beispielsweise im Rahmen einer Aufführung gesprochen oder gesungen wird, müssen die Vortragenden ihren Text zuvor auswendig lernen. Obwohl die jeweiligen Akteure auf das Erlernen von Texten geschult sind, kommt es dennoch häufig zu unerwünschten kurzzeitigen Lücken in der Erinnerung.

Um dem abzuhelfen, gibt es die Möglichkeit, dem jeweiligen Akteur den Text auf einem nahe der Blickrichtung ins Publikum angebrachten Monitor anzuzeigen. Damit der Text in ausreichend großer, gut lesbarer Schrift dargestellt werden kann, ist die Anzeige jeweils auf einen relativ eng begrenzten Abschnitt innerhalb des gesamten Textes beschränkt. Mit dem Fortschreiten im Text muss regelmäßig der angezeigte Abschnitt aktualisiert werden, d.h. der Text läuft kontinuierlich oder taktweise auf dem Monitor durch. In der Regel ist hierfür ein festes Tempo vorgesehen, an das sich der jeweilige Akteur anpassen muss. Wenn eine individuelle Weiterschaltung gewünscht wird, so muss eine zusätzliche Person die Anzeige bedienen oder dem Vortragenden muss die Möglichkeit gegeben werden, über entsprechende Schalter oder Taster den jeweils angezeigten Text selbst weiterzuschalten, was gegebenenfalls zu einer Ablenkung des Akteurs führen kann und vom Publikum bemerkt wird.

Das gleiche Problem tritt auf, wenn innerhalb eines Vortrags oder Lieds zu bestimmten Stellen andere Aktionen, beispielsweise ein Einstellen einer bestimmten Beleuchtung, eine Verdunkelung des Raums, die Einspielung eines Films, ein "Folienwechsel" bzw. Bildwechsel oder Bildeinschub während einer computerunterstützten Präsentation etc. erfolgen sollen. Auch hier muss entweder der Akteur selbst diese Aufgaben übernehmen oder es wird zusätzliches Personal benötigt, das entweder den gesamten vorgetragenen Text genau kennt oder vom Vortragenden entsprechende Anweisungen erhält, was wiederum innerhalb des Vortragsablaufs störend sein kann.

In der WO 00/54496 A1 wird daher ein elektronischer Vortragsassistent beschrieben, bei dem einerseits vorzutragende Informationseinheiten gespeichert werden und andererseits die vorgetragenen Informationseinheiten erfasst werden und die aktuell vorgetragenen Informationseinheiten mit den gespeicherten Informationseinheiten verglichen werden. Über eine Ausgabeeinheit werden dann die vorzutragenden Informationseinheiten in Abhängigkeit von den vorgetragenen Informationseinheiten so ausgegeben, dass dem Vortragenden der aktuell vorzutragende Text angezeigt wird. Ein entsprechendes System wird in der EP 0 896 467 A1 beschrieben, wobei hier die Aktualisierungsgeschwindigkeit des angezeigten Textes an die Vortragsgeschwindigkeit angepasst wird. Außerdem beschreiben die DE 198 08 585 A1 und die DE 38 39 361 A1 ähnliche Systeme. Bei all diesen System bleibt aber nach wie vor ein Problem, wenn der Vortragende trotz der Visualisierung des Textes aus dem Konzept kommt, beispielsweise, wenn er auf unerwartete Zwischenfragen antworten muss oder in ähnlichen Situationen. Oft ist es für den Vortragenden dann schwierig, passend wieder in den Text hineinzukommen, insbesondere wenn es nicht möglich ist, einen unterbrochenen Satz einfach unverändert fortzusetzen, sondern wenn er mit dem Satz eigentlich von Neuem beginnen müsste oder auf Basis des Kontextes der aktuellen Unterbrechung und des Kontextes, in dem der Satz im Vortrag steht, den Satz vorteilhafterweise so verändern sollte, um die Zuhörer wieder in den Vortrag einzustimmen.

Es ist daher eine Aufgabe der vorliegenden Erfindung, eine verbesserte Alternative zu dem o. g. Stand der Technik zu schaffen, welche dem Vortragenden nach einem Versprechen oder einer Unterbrechung ein leichteres Wiederhereinfinden in den Vortrag ermöglicht. Diese Aufgabe wird durch ein Verfahren gemäß Patentanspruch 1 und ein System gemäß Patentanspruch 4 gelöst. Die abhängigen Ansprüche enthalten besonders vorteilhafte Ausgestaltungen und Weiterbildungen des erfindungsgemäßen Verfahrens und des erfindungsgemäßen Systems.

Erfindungsgemäß werden zunächst, d. h. vor dem Vortragen, zumindest ganze Abschnitte des Vortragstextes gespeichert. Des Weiteren wird beim Vortragen der Vortragstext von einer akustischen Aufnahmeeinrichtung, beispielsweise einem Mikrofon, erfasst und einer Spracherkennung zugeführt. Mit Hilfe dieser Spracherkennung wird dann der erfasste Vortragstext mit den gespeicherten Wörtern oder Wortkombinationen verglichen. Es wird zumindest ein Abschnitt des Vortragstextes, welcher ein zuletzt erkanntes Wort oder eine Wortkombination enthält, mittels einer optischen Ausgabeeinrichtung visualisiert und dabei zumindest bei Erkennen einiger der gespeicherten Wörter oder Wortkombinationen jeweils die Visualisierung aktualisiert. Das heißt, es wird jeweils der aktuelle Textabschnitt automatisch ohne weiteres Personal und ohne ein spezielles aktives Zutun des Vortragenden auf dem Monitor weitergestellt. Durch Betätigung einer Betätigungseinrichtung durch den Vortragenden ist außerdem die Größe des jeweils visualisierten Textabschnitts veränderbar. Mittels dieser Betätigungseinrichtung, welche zum Beispiel eine einfache Taste umfasst, kann der Vortragende dafür sorgen, dass ein größerer Ausschnitt des Vortragstextes um das erkannte Wort oder die Wortkombination herum visualisiert wird. Ein solcher "Panik-Knopf", der das Zeigen eines größeren Ausschnitts des zuletzt noch sicher erkannten Bereichs der Rede veranlasst, ist hilfreich, um nach Erkennungsfehlern, Versprechern oder sonstigen Unterbrechungen den Anschluss wieder zu finden, Das Herunterschalten auf einen Ideineren Ausschnitt mit größerer Schrift kann dann erfolgen, sobald eine bestimmte Wortfolge vom Spracherkennungssystem wiedererkannt wurde. Ebenso ist eine Zurückschaltung nach einem bestimmten Zeitablauf oder durch eine weitere Betätigungseinrichtung möglich.

Zusätzlich können automatisch weitere definierte, z. B. zuvor festgelegte Aktionen ausgelöst werden. Bei diesen kann es sich um Aktionen wie eine Beleuchtung, Verdunkelung etc. handeln.

Bei den für die Erkennung gespeicherten Wörtern kann es sich beispielsweise sowohl um den gesamten Vortragstext als auch um eine Stichwortliste handeln, die innerhalb des Vortragstextes der Reihe nach abgehandelt wird und die auch im Vortragstext auftaucht. Das heißt, das erfindungsgemäße Verfahren und System ist auch für freie Redner geeignet, die lediglich anhand einer Stichwortliste arbeiten. Bei den Wortkombinationen kann es sich zum Beispiel um Sätze oder Satzfragmente handeln. Es kann sich aber auch um Kombinationen von einzelnen Stichworten handeln, die einen bestimmten Sinnzusammenhang ergeben und die dann innerhalb eines bestimmten Satzes während des Vortrags an einer vorgegebenen Stelle auftauchen werden. So könnten beispielsweise die Begriffe "Umsatz", "Gewinne", "1999" und 2000" jeweils zu unterschiedlichen Kombinationen zusammengefasst werden, wobei bei Auftreten einer Kombination aus diesen Worten jeweils unterschiedliche Aktionen durchgeführt werden. Auf diese Weise können zum Beispiel bei einem Auftreten der Kombinationen "Gewinne" und "2000", " Gewinne" und "1999" sowie "Umsatz" und "2000" jeweils automatisch unterschiedliche Graphiken dem Publikum vorgestellt werden.

Ein System zur Durchführung eines solchen Verfahrens benötigt zunächst Mittel zur Eingabe von zumindest Abschnitten des Vortragstextes. Hierbei kann es sich beispielsweise um eine Schnittstelle zum Übertragen der fertigen Rede von einem PC, um eine Datenträgerleseeinrichtung, wie ein Diskettenlaufwerk, oder um eine Tastatur etc. handeln. Des Weiteren benötigt das System einen Speicher, in dem die Abschnitte des Vortragstextes hinterlegt werden. Bei Verwendung einer Datenträger-Leseeinrichtung kann selbstverständlich auch der eingelegte Datenträger selbst als Speicher dienen.

Weiterhin wird eine akustische Aufnahmeeinrichtung beispielsweise ein Mikrofon, zum Erfassen des Vortragstextes während eines Vortrags benötigt. Das System braucht außerdem Mittel zum Vergleich des erfassten Vortragstextes mit gespeicherten Wörtern oder Wortkombinationen des Vortragstextes, wobei diese Mittel ein Spracherkennungssystem umfassen. Hierbei kann das Spracherkennungssystem selbst bereits insofern einen Vergleich durchführen, als beispielsweise dem Spracherkennungssystem als zulässige Wörter in einer Bibliothek nur die gespeicherten Wörter bzw. Wortkombinationen des Vortragstextes als "Kandidaten" zur Verfügung stehen. Es kann sich aber auch um eine herkömmliche Spracherkennung mit einer umfangreichen Bibliothek handeln, wobei dieser Spracherkennung dann ein separater Vergleicher nachgeschaltet ist, welcher die von der Spracherkennung erkannten Wörter mit den gespeicherten Wörtern und Wortkombinationen bzw. den Wörtern des vollen gespeicherten Textes vergleicht.

Außerdem benötigt das System eine Visualisierungseinrichtung zur Visualisierung zumindest eines ein zuletzt erkanntes Wort oder eine Wortkombination enthaltenden Abschnitts des Vortragstextes.

Hierbei kann es sich beispielsweise um eine optische Ausgabeeinrichtung, wie einen Monitor oder einen Projektor, mit einer entsprechenden Steuereinrichtung zum Anzeigen eines Abschnitts des Vortragstextes um das erkannte Wort herum handeln.

Erfindungsgemäß besitzt das System zudem eine geeignete Betätigungseinrichtung, beispielsweise eine Taste oder einen Schalter, zur Einstellung der Größe des aktuell visualisierten Textausschnitts um das erkannte Wort herum. Diese Betätigungseinrichtung besteht vorzugsweise aus einer einfachen Taste für den Vortragenden, welche so geschaltet ist, dass bei jedem Drücken der Taste ein jeweils größerer Ausschnitt des Vortragstextes, um das erkannte Wort oder die Wortkombinanon herum visualisiert wird,

Zusätzlich kann das System weitere Mittel zum Ausführen von anderen Aktionen oder eine Schnittstelle aufweisen, über welche Steuerbefehle zur Durchführung bestimmter Aktionen an andere Geräte übermittelt werden, beispielsweise einen Steuerausgang für einen Dia- oder Filmprojektor oder zum Ein- und Ausschalten der Beleuchtung Ebenso ist auch möglich, dass es sich um eine, gegebenenfalls auch drahtlose, Schnittstelle handelt, welche mit einem PC in Verbindung steht, auf dem während des Vortrags ein Präsentationsprogramm läuft, mit dem über eine geeignete Anzeigevorrichtung dem Publikum "Folien" vorgestellt werden.

Vorzugsweise wird außerdem eine Reihenfolge des Auftretens der Wörter oder Wortkombinationen innerhalb des Vortragstextes gespeichert. Bei einem Erkennen eines der gespeicherten Wörter oder Wortkombinationen des Vortragstextes wird dann geprüft, ob das erkannte Wort oder die Wortkombination unter Berücksichtigung dieser gespeicherten Reihenfolge nach einem zuvor gespeicherten Wort oder einer Wortkombination des Vortragstextes auftreten kann. Das heißt, es wird zusätzlich kontrolliert, ob diese Worte überhaupt in der Reihenfolge aufeinander folgen können. Nur in diesem Fall wird die definierte Aktion ausgelöst. Um zu vermeiden, dass durch eventuell nicht richtig erkannte Wörter das gesamte System außer Funktion gesetzt wird, sollte hierbei nicht nur auf das direkt nachfolgende bzw. vorausgehende Wort geachtet werden, sondern es sollten auch in weiterem Abstand nachfolgende bzw. vorhergehende Wörter berücksichtigt werden. Das heißt, dass gegebenenfalls auch bestimmte Wörter übersprungen werden.

Ebenso vorteilhaft ist eine einfache Betätigungseinrichtung zum vorübergehenden Deaktivieren und/oder Aktivieren des Systems. Mittels einer solchen "Pausetaste" kann dafür gesorgt werden, dass der Akteur spontan nicht zuvor gespeicherte Teile in seinen

Vortrag aufnimmt und während dieser Zeit das gesamte System pausiert und somit nicht fehlerhaft Aktionen einleitet.

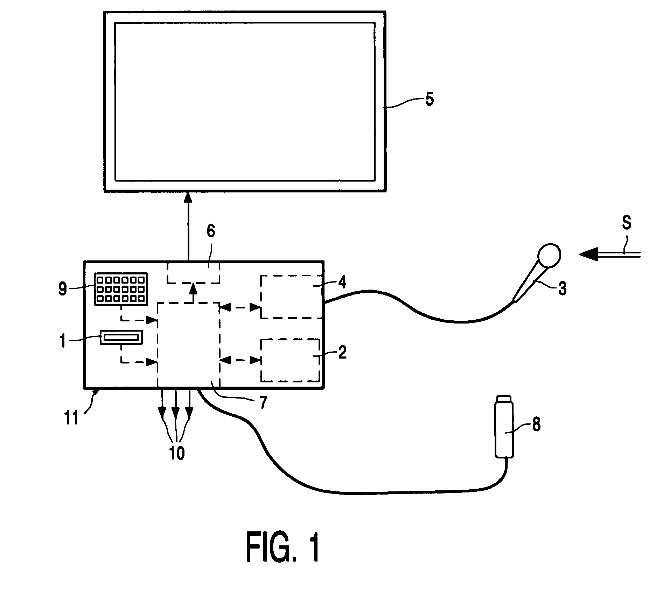

Die Erfindung wird im Folgenden unter Hinweis auf die beigefügte Figur näher erläutert. Die einzige Figur zeigt schematisch den Aufbau eines erfindungsgemäßen Systems mit den für die Erfindung wesentlichen Komponenten.

In dem in der Figur dargestellten Ausführungsbeispiel weist das System zunächst ein Gerät 11 auf, an das ein Mikrofon 3 und ein Monitor 5 angeschlossen sind.

Dieses Gerät 11 weist ein Diskettenlaufwerk 1 sowie eine Tastatur 9 auf. Darüber hinaus besitzt dieses Gerät 11 eine Bildschirmsteuerung 6, eine Spracherkennungseinheit 4, einen Speicher 2 sowie eine zentrale Steuereinheit 7. Sämtliche übrigen Komponenten kommunizieren mit dieser Steuereinheit 7 und somit auch untereinander über diese Steuereinheit 7. Das Mikrofon 3 ist im vorliegenden Ausführungsbeispiel direkt über einen entsprechenden Eingang (nicht dargestellt) an die Spracherkennungseinrichtung 4 angeschlossen.

Zur Durchführung des erfindungsgemäßen Verfahrens wird vor dem Vortrag der gesamte Vortragstext auf einer Diskette gespeichert und über das Diskettenlaufwerk 1 und die Steuereinheit 7 im Speicher 2 hinterlegt. Über die Tastatur 9 können zusätzliche Parameter, beispielsweise die verwendete Sprache, als Information für das Spracherkennungssystem 4 eingegeben werden. Außerdem können hierüber auch die zusätzlichen Steuerbefehle definiert werden, beispielsweise bei welchen Wörtern welche speziellen Aktionen durchgeführt werden sollen. Alternativ können diese Informationen auch gemeinsam mit dem Text in einem bestimmten Format auf der Diskette gespeichert sein.

Die vom Akteur abgegebenen akustischen Sprachsignale S werden während des Vortrags vom Mikrofon 3 erfasst und an die Spracherkennungseinrichtung 4 weitergeleitet. Diese Spracherkennungseinrichtung 4 ist mittels der Steuereinheit 7 so angestellt, dass nur nach dem im Speicher 2 hinterlegten Vortragstext bzw. den dort hinterlegten Wörtern und Wortkombinationen gesucht wird und nur dementsprechende Begriffe erkannt werden. Eine auf einen derartig begrenzten Wortschatz reduzierte Spracherkennung arbeitet in der Regel schneller und sicherer als eine Spracherkennung mit einer sehr viel größeren Bibliothek und somit einem größeren Angebot an potentiell zu erkennenden Wörtern und Sätzen.

Über die Steuereinheit 7 und die Bildschirmsteuerung 6 wind auf dem Monitor 5 der gespeicherte Text abschnittsweise angezeigt, wobei jeweils ein Textabschnitt um das jeweils zuletzt erkannte Wort herum dargestellt wird. Das jeweils erkannte Wort bzw. die Wortkombination wird bei dieser Visualisierung des Textabschnitts, beispielsweise farbig oder in Kursivschrift, markiert, so dass der Vortragende jeweils sieht, WO er sich im Text befindet. Bei Erkennen bestimmter Worte wird automatisch die Anzeige auf dem Monitor 5 aktualisiert, d.h. es wird weitergeschaltet, so dass immer ein Textabschnitt um das jeweils zuletzt gesprochene Wort des Akteurs herum angezeigt wird. Hierzu können bestimmte Wörter als Schlüsselwörter dienen, dh nur bei diesen speziellen Wörtern wird die Anzeige umgeschaltet. Diese Wörter können zum einen zuvor festgelegt werden. Sie können aber auch erst durch die Position innerhalb des aktuell gezeigten Textabschitts definiert werden. So kann es sich beispielsweise immer um das erste oder zweite Wort der letzten Zeile des gerade angezeigten Textabschnitts handeln, bei dem ein Aktualisieren der Anzeige erfolgt.

In einer anderen Einstellung ist jedes hinterlegte Wort ein solches Steuerwort, dh der Abschnitt wind bei Erkennen jedes einzelnen Wortes beispielsweise um ein Wort weiter verschoben. Bei Hinterlegung eines vollständigen Vortragstextes führt dies dazu, dass kontinuierlich der Text durchläuft, wobei das Tempo von dem Sprecher selbst durch seinen Vortrag vorgegeben wird Das heißt, es muss sich nicht der Sprecher mit seinem Sprechtempo an die Anzeige anpassen, sondern die Anzeige wird an das aktuelle Sprechtempo des Akteurs angepasst.

An die Steuereinheit 7 ist außerdem ein "Panik-Knopf" 8 angeschlossen. Wenn der Akteur nach einem eventuellen Erkennungsfehler oder einem Versprecher den Anschluss nicht sofort wiederfindet, kann er durch Drücken dieses Panik-Knopfs einstellen, dass ein größerer Ausschnitt des zuletzt noch sicher erkannten Bereichs des Vortragstextes auf dem Monitor 5 dargestellt wird, wodurch dem Akteur der Wiedereinstieg erleichtert wird.

Die Steuereinheit 7 weist außerdem mehrere Steuerausgänge 10 auf. An diese Steuerausgänge 10 können beliebige andere Geräte, beispielsweise ein Dia- oder Filmprojektor, eine Verdunkelungseinrichtung etc. angeschlossen werden. An den Steuerausgängen 10 werden dann jeweils an die angeschlossenen Geräte zuvor definierte Steuerbefehle ausgegeben, sobald eines dieser Geräte eine bestimmte Aktion durchführen soll. Die Ausgabe dieser Steuerbefehle erfolgt dann, wenn von dem Spracherkennungssystem 4 zuvor definierte Schlüsselwörter innerhalb des Vortrags erkannt werden.

Das Gerät 11 ist hier als ein kompaktes Gerät dargestellt, welches aus verschiedenen Einzelkomponenten in einem Gehäuse gemeinsam aufgebaut ist. Alternativ kann das System natürlich auch aus verschiedenen solcher Einzelkomponenten in separaten Gehäusen bestehen, welche entsprechend untereinander verkoppeltt sind. Es bietet sich auch an, einige der dargestellten Komponenten, beispielsweise das Spracherkennungssystem 4, in Form von Software auf einem geeigneten Rechner zu realisieren. Das Gerät 11 selbst ist dabei beispielsweise der Rechner. Die Steuereinheit 7 wird dann dementsprechend zum Beispiel von der CPU gebildet und die Spracherkennungseinheit 4 ist innerhalb dieser CPU oder in einem separaten parallelen Prozessor in Form der Software realisiert. Bei der Bildschirmsteuerungseinheit 6 kann es sich dabei beispielsweise um eine herkömmliche Graphikkarte mit entsprechender Treibersoftware für den Monitor 5 handeln. Ebenso enthält ein solcher Rechner in der Regel eine Tastatur bzw. einen Anschluss hierfür, ein Diskettenlaufwerk, einen geeigneten Speicher sowie entsprechende serielle und parallele Steuerausgänge und Eingänge zum Anschluss einer Betätigungseinrichtung beispielsweise einer Maus. Diese Eingänge können zum Anschluss einer "Panik-Taste" dienen.

Durch die Erfindung wird ein neues, spracherkennungsbasiertes Hilfsmittel zur Verfügung gestellt, die Arbeit von Vortragenden jeder Art wie Rednern, Nachrichtensprechern, Sängern, Moderatoren, Schauspielern etc. erleichtert. Da davon auszugehen ist, dass bei derartigen Veranstaltungen in der Regel gute akustische Bedingungen (beispielsweise durch Verwendung spezieller für Sprecher geschaffener "Close Talk"-Mikrofone) existieren, dass die Redner oft sprachlich geschult sind und dass zudem der zu erkennende Text (bzw. die Wörter oder Wortkombinationen) bereits worher bekannt ist, ist gewährleistet, dass das für die Erfindung benötigte Spracherkennungssystem robust und schnell arbeiten kann.

## Patentansprüche

1. Verfahren zur automatischen Steuerung von Aktionen in Abhängigkeit von einem Vortragstext, bei dem
zumindest ganze Abschnitte des Vortragstextes gespeichert werden
und der Vortragstext beim Vortragen von einer akustischen Aufnahmeeinrichtung erfasst und einer Spracherkennung zugeführt wird
und mit Hilfe der Spracherkennung der erfasste Vortragstext mit gespeicherten Wörtern oder Wortkombinationen des Vortragstextes, verglichen wird
und zumindest ein Abschnitt des Vortragstextes, welcher ein zuletzt erkanntes Wort oder eine Wortkombination enthält, mittels einer optischen Ausgabeeinrichtung (5) visualisiert wird und zumindest bei Erkennen einiger der gespeicherten Wörter oder Wortkombinationen jeweils die Visualisierung aktualisiert wird,
**dadurch gekennzeinchnet,**
**dass** bei Betätigung einer Betätigungseinrichtung (8) durch einen Vortragenden die Größe des jeweils visualisierten Textabschnitts verändert wird.

2. Verfahren nach Anspruch 1,
**dadurch gekennzeichnet,**
**dass** eine Reihenfolge des Auftretens der Wörter oder Wortkombinationen im Vortragstext gespeichert wird und bei einem Erkennen eines der gespeicherten Wörter oder Wortkombinationen des Vortragstextes geprüft wird, ob das erkannte Wort oder die Wortkombinationen unter Berücksichtigung dieser Reihenfolge nach einem zuvor erkannten gespeicherten Wort oder einer Wortkombinationen des Vortragstextes auftreten kann.

3. Verfahren nach Anspruch 2,
**dadurch gekennzeichnet,**
**dass** das jeweilige erkannte Wort oder die Wortkombination bei der Visualisierung des Textabschnitts markiert wird.

4. System zur automatischen Steuerung von Aktionen in Abhängigkeit von einem Vortragstext mit Mitteln (1) zur Eingabe von zumindest Abschnitten des Vortragstextes, einem Speicher (2) zum Speichern der Abschnitte des Vortragstextes,
einer akustischen Aufnahmeeinrichtung (3) zum Erfassen des Vortragstextes während eines Vortragens,
mit Mitteln (4) zum Vergleich des erfassten Vortragstextes mit gespeicherten Wörtern oder Wortkombinationen des Vortragstextes, wobei diese Mittel ein Spracherkennungssystem umfassen,
und mit einer Visualisierungseinrichtung (5) zur Visualisierung zumindest eines ein zuletzt erkanntes Wort oder eine Wortkombination enthaltenden Abschnitts des Vortragstextes,
**gekennzeichnet durch**
eine Betätigungseinrichtung (8) zur Einstellung der Größe eines aktuellen visualisierten Textausschnitts **durch** einen Vortragenden.

5. System nach Anspruch 4,
**dadurch gekennzeichnet,**
**dass** die Betätigungseinrichtung (8) eine Taste umfasst, welche so geschaltet ist, dass bei jedem Drücken der Taste ein jeweils größerer Ausschnitt des Vortragstextes um das erkannte Wort oder die Wortkombination herum visualisiert wird.

6. System nach Anspruch 4 oder 5,
**gekennzeichnet durch**
eine Betätigungseinrichtung zum vorübergehenden Deaktivieren und/oder Aktivieren des Systems.

## Claims

1. A method of automatically controlling actions in dependence on a text of a speech, in which at least entire sections of the speech text are stored, and the text to be delivered is captured during delivery by an acoustic recording device and applied to a speech recognizer, and with the aid of the speech recognizer the captured text is compared with stored words or word combinations of the speech text, and at least one section of the speech text, which contains a just recognized word or word combination, is displayed by means of an optical display device (5) and the display is updated at least each time when several of the stored words or word combinations are recognized, **characterized in that** when an actuation device (8) is operated by a person delivering a speech, the size of the respectively displayed text section is changed.

2. A method as claimed in claim 1, **characterized in that** the order in which the words or word combinations occur in the text of a speech is stored and, when one of the stored words or word combinations of the speech text is recognized, a check is made whether the recognized word or word combinations can occur after a previously recognized stored word or word combination of the speech text, while said order is taken into consideration.

3. A method as claimed in claim 2, **characterized in that** the respective recognized word or word combination is marked when the text section is displayed.

4. A system for automatically controlling actions in dependence on a text of a speech, comprising means (1) for entering at least sections of the speech text, a memory (2) for storing the sections of the speech text, an acoustic recording device (3) for capturing the speech text during a delivery of the speech, means (4) for comparing the captured speech text with stored words or word combinations of the speech text, which latter means comprise a speech recognition system, and comprising an optical display device (5) for displaying at least one section of the speech text, which contains a just recognized word or word combination, **characterized by** an actuation device (8) for adjusting the size of a currently displayed text section by a person delivering a speech.

5. A system as claimed in claim 4, **characterized in that** the actuation device (8) comprises a push-button which is arranged so that with each depression of the push-button a larger section of the speech text around the recognized word or word combination is displayed.

6. A system as claimed in claim 4 or 5, **characterized by** an actuation device for temporarily deactivating and/or activating the system.

## Revendications

1. Procédé de reconnaissance automatique d'actions en fonction d'un texte prononcé dans lequel
au moins des segments complets du texte prononcé sont enregistrés
et le texte prononcé est enregistré lors de son prononcé par un dispositif d'enregistrement acoustique
et amené à un dispositif de reconnaissance vocale
et le texte prononcé enregistré est comparé à l'aide du dispositif de reconnaissance vocale avec des mots ou combinaisons de mots enregistrés du texte prononcé
et au moins un segment du texte prononcé qui contient au moins un mot ou une combinaison de mots reconnus en dernier lieu est visualisé à l'aide d'un dispositif de sortie optique (5) et la visualisation est respectivement actualisée, du moins lors de la reconnaissance de certains des mots ou combinaisons de mots enregistrés,
**caractérisé en ce**
**que** la taille du segment de texte respectivement visualisé est modifiée lors de l'actionnement d'un dispositif d'actionnement (8) par un orateur.

2. Procédé selon la revendication 1,
**caractérisé en ce**
**qu'**une séquence d'apparition des mots ou combinaisons de mots est enregistrée dans le texte prononcé et, lors d'une reconnaissance d'un des mots ou combinaisons de mots enregistrés du texte prononcé enregistré, on contrôle si le mot ou les combinaisons de mots reconnus peuvent se produire en prenant en considération cet ordre selon un mot ou une combinaison de mots préalablement enregistrés du texte prononcé.

3. Procédé selon la revendication 2,
**caractérisé en ce que** le mot ou la combinaison de mots reconnus respectifs sont marqués lors de la visualisation du segment de texte.

4. Système de commande automatique d'actions en fonction d'un texte prononcé avec des moyens (1) pour introduire au moins des segments du texte prononcé, une mémoire (2) pour l'enregistrement des segments du texte prononcé,
un dispositif d'enregistrement acoustique (3) pour l'enregistrement du texte prononcé pendant un exposé,
avec des moyens (4) de comparaison du texte prononcé enregistré avec des mots ou combinaisons de mots enregistrés du texte prononcé, ces moyens comprenant un système de reconnaissance vocale et
avec un dispositif de visualisation (5) pour la visualisation d'au moins un segment du texte prononcé contenant un mot ou une combinaison de mots reconnus en dernier lieu,
**caractérisé par**
un dispositif d'actionnement (8) pour le réglage de la taille d'un segment de texte visualisé actuel par un orateur.

5. Système selon la revendication 4,
**caractérisé en ce**
**que** le dispositif d'actionnement (8) comprend une touche qui est commutée de telle sorte de qu'un fragment respectivement plus grand du texte prononcé autour du mot ou de la combinaison de mots reconnus soit visualisé à chaque pression de la touche.

6. Système selon l'une de revendications 4 ou 5,
**caractérisé par**
un dispositif d'actionnement pour la désactivation et/ou l'activation temporaires du système.
